# EUROPEAN PATENT APPLICATION

(11) **EP 1 595 766 A2**
(43) Date of publication of application: **16.11.2005**
(21) Application number: 05010015.5
(22) Date of filing: 09.05.2005
(51) Int. Cl.: B62D 1/12

(54) **Steering device for motor vehicles in general**

(30) Priority: 13.05.2004 IT VE20040019
(71) Applicant: FADIEL ITALIANA S.R.L., 30020 Marcon Venezia (IT)
(72) Inventor: Domeneghini, Fabio, 30020 Marcon (IT)
(74) Representative: Piovesana, Paolo

(57) **Abstract**

A device for operating the steering in motor vehicles in general, characterised by comprising:
- a mechanical unit (10, 12) for operating the steering system in the two direction,
- a gear coupling between said mechanical unit (10, 12) and a positioning wheel (30),
- a member (6) by which the driver controls the steering, said control member having a neutral central position and two positions displaced from said central position for steering in one or other direction,
- a position transducer (42) with a first part (48) rotatably associated with the two directions of rotation of said positioning wheel (30) and with a second part (40) movable relative to the first and associated with said control member (6),
- a control unit (8) connected to said position transducer (42) to receive signals controlling steering in one or other direction in accordance with the position of said control member (6) when deviated from said neutral central position, and also connected to said mechanical unit to cause said positioning wheel (30) to rotate in accordance with the signals received from said position transducer.

## Description

The present invention relates to a steering device for motor vehicles in general.

Motor vehicles are steered from the driver's seat with the steering wheel, which is operated clockwise or anticlockwise by the driver to steer the vehicle to the right or to the left respectively.

Given the dimensions of the steering wheel, its rotation in one or the other direction requires certain arm movements by the driver and a certain force, which however is currently reduced considerably by the increasing use of servo-steering, but this can be difficult for disabled persons who possess only a limited muscular force and capacity for movement.

To overcome these limitations small levers have already been proposed able to limit the movement required of the disabled person, but these have not proved satisfactory, as there is little association between the operation effected and its execution, in the sense that they do not provide the driver with satisfactory perception of the movement the driver is making, with consequent steering instability and danger especially at average speeds.

An object of the invention is therefore to provide a lever device for operating the steering in motor vehicles in general, which provides the driver with high perception of the movement being undertaken.

Another object of the invention is to provide a steering device installable in any motor vehicle without modifying the original steering system.

Another object of the invention is to provide a steering device able to modulate the control, in the sense of achieving a sort of inverse proportionality between variations in the angle of inclination of the lever for lever positions increasingly deviated from the neutral position and the corresponding variations in the steering radius.

These and other objects which will be apparent from the ensuing description are attained, according to the invention, by a device for operating the steering in motor vehicles in general, as described in claim 1.

A preferred embodiment of the present invention and a variant thereof are further described hereinafter with reference to the accompanying drawings, in which:

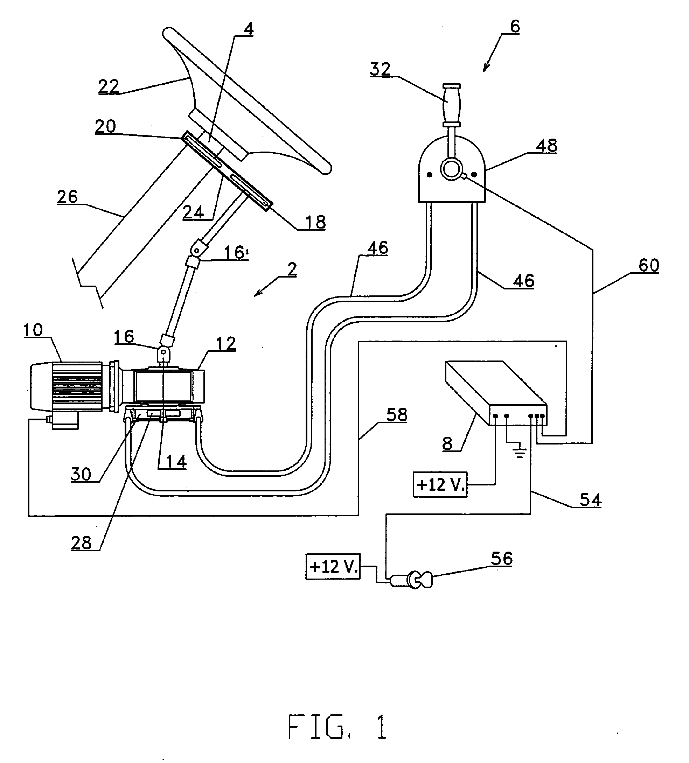

- Figure 1: is a schematic view of a lever device according to the invention,

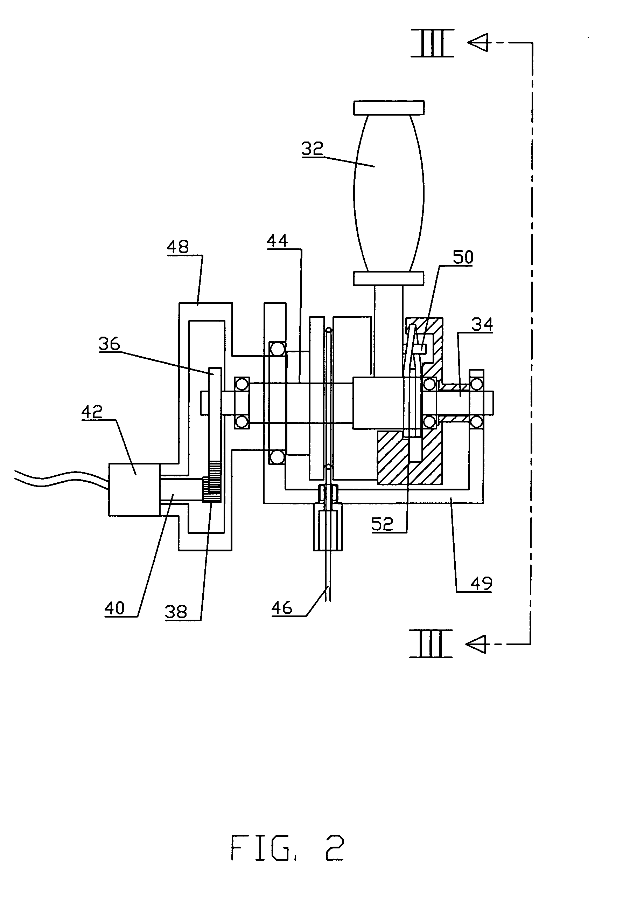

- Figure 2: is a detailed view of the control lever associated with the position transducer,

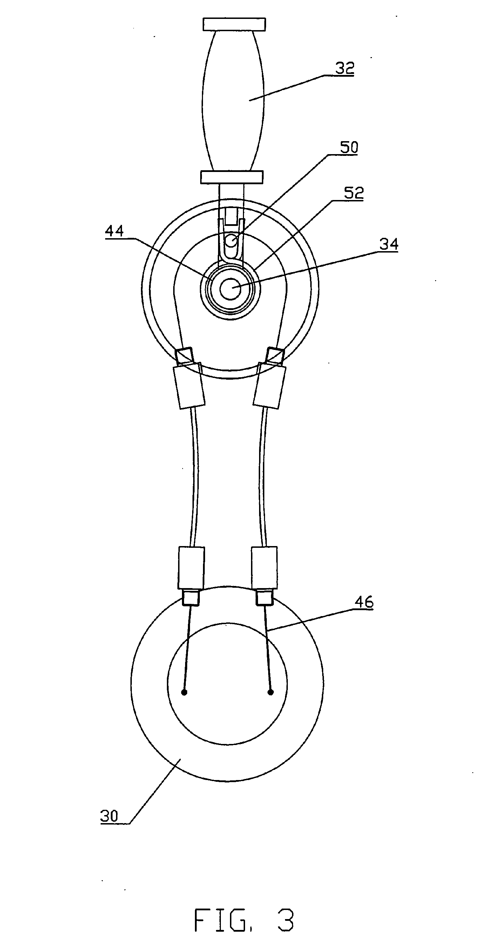

- Figure 3: is a detailed view in the direction III-III of Figure 2 showing a first embodiment of the positioning wheel, and
- Figure 4: shows a variant in the same view as Figure 3.

As can be seen from the figures, the device of the invention comprises essentially a unit 2 for operating the steering column 4, a lever control unit 6 and an electronic control unit 8.

The operating unit 2 for the steering column 4 comprises an electric motor 10 powered by the control unit 8 and having its output shaft connected to the input of a speed reducer 12, preferably of the worm-helical gear type. To enable the steering equipment to be operated by the steering wheel 22 in traditional manner, i.e. by excluding the device of the invention, the speed reducer 12 is of reversible type, preferably with a reduction ratio of 1:4.

The exit shaft 14 of the speed reducer 12, i.e. the shaft keyed to the helical gear, extends at both ends beyond the speed reducer casing: it is connected at one end via a double universal joint 16, 16' to a first gearwheel 18 engaging a second gearwheel 20 rigid with the steering column 4, with which the steering wheel 22 is also rigid. The two gearwheels 18, 20 are identical and are contained within a box 24, which can be fixed to the tubular casing 26 housing the steering column 4.

The box 24 can be fixed to the tubular casing in any manner known to the expert of the art, and does not form part of the invention.

Keyed onto the other end of the exit shaft 14 of the speed reducer there is a gearwheel 28 engaging another gearwheel 30 of greater diameter, defined as a positioning wheel. For the reasons which will be clear hereinafter, the reduction ration between the gearwheel 28 and the positioning wheel 30 is 1:6, 6 being double the number of revolutions which the steering 22 has usually to make to pass from one to the other end steering position of a motor vehicle.

The control unit 6 comprises a lever keyed onto a shaft 34, onto one end of which there is keyed the toothed sector 36, which engages a small gearwheel 38.

This gearwheel 38 is keyed onto the shaft 40 of a potentiometer 42. The entire arrangement is housed in a box casing 48, which is free to rotate about a support 49 for its fixing to the vehicle structure.

The shaft 34 is also supported, via bearings, within a tubular shaft 44, about which two steel cables 46 fixed thereto are wound to slide within sheaths, to be fixed at their distant end to two diametrically opposite points on the positioning wheel 30.

The box 48 housing the toothed sector 36 and the gearwheel 38, and which is rigid with the casing of the potentiometer 42, is also rigidly fixed to the tubular shaft 44.

Fixed to the lever 32 there is a pin 50 disposed parallel to the axis of the shaft 34 and retained elastically in its rest state by the two bent ends of a fixed coil spring 52 disposed coaxially about the tubular shaft 44.

The electronic control unit 8 is powered by the vehicle battery (+12V) and is provided with a connection 54 to the ignition block 56, a connection 58 to the electric motor 10 and a connection 60 to the potentiometer 42.

This embodiment of the device of the invention operates as follows:
when travelling normally on a straight road the control lever 32 lies in the neutral position, i.e. in a position equidistant between the two end positions. When in this state the shaft 40 of the potentiometer 42 is also in the neutral position and no control signal reaches the control unit 8, which hence does not power the motor 10. The state of the speed reducer 12 is such that the overall components which mechanically connect to the steering column 4 maintain the vehicle under rectilinear travel.

To steer, for example towards the right, the disabled driver turns the lever 32 towards the right to slightly rotate the shaft 34 and the toothed sector 36, which by virtue of its engagement with the gearwheel 38 rotates the shaft 40 of the potentiometer 42.

In this manner the potentiometer 42 generates an electrical signal which via the connection 60 reaches the control unit 8. This then feeds electric power to the motor 100 via the connection 58 to cause it to rotate, causing the exit shaft 14 of the speed reducer 12 to also rotate.

This rotation of the shaft 14 has a double effect. On the one hand, via the double universal joint 16, 16' and the gearwheels 18, 20 it rotates the steering column 4 in the direction to steer the vehicle wheels towards the right. On the other hand, via the gearwheels 18, 20 and the two cable connections 42, it rotates the tubular shaft 44, the box 48 and the housing of the potentiometer 42, all rigid with each other, in the direction tending to move the potentiometer 42 into its neutral position. On attaining this position the potentiometer 42 evidently ceases to feed the control signal to the control unit 8, which ceases to power the motor 10 so that there is no further steering of the vehicle wheels. If however the driver continues to maintain the deviated position of the lever 32, the steering effect is increased, whereas if the lever is moved into the opposite deviated position the opposite result is achieved.

It will be apparent that at all times the driver obtains considerable perception of the movement, while the command is being gradually transmitted.

This is achieved with a device which does not require effort for its operation, the force being only that necessary to deviate the lever 32 from its neutral position and hence to overcome the elastic reaction of the spring 52.

A device is achieved which is applicable to the original steering system of the vehicle, hence without requiring any certification.

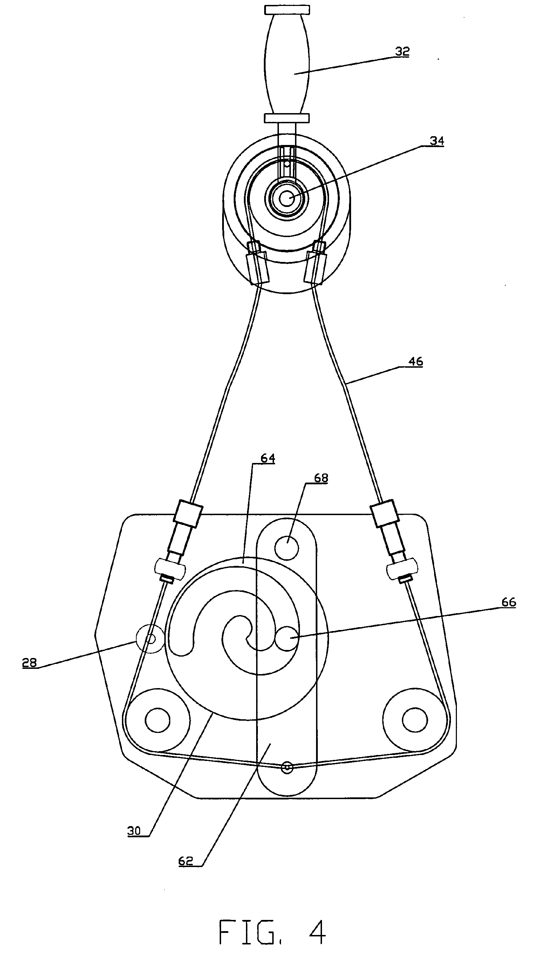

In the embodiment shown in Figure 4, instead of being directly connected to the positioning wheel 30, the two cables 46 are fixed to the end of a bar 62 forming an oscillating link bar, operated by said positioning wheel 30. In detail, the positioning wheel 30 is provided with a spiral slot 64, in which there engages a pin 66 rigid with the bar 62 which, at the opposite end to that to which the cables 66 is fixed, is pivoted on another pin 68 fixed to the structure of the speed reducer 12. The shape of this slot 64 is such that its inner and outer end portions are substantially concentric with the axis of rotation of the positioning wheel 30, while the central portion connecting the two end portions presents a radius which varies considerably.

The neutral position of the device of the invention for rectilinear travel is such that the pin is situated at about the centre of the central portion of the slot 64, so that small rotations of the positioning wheel 30 produce wide angular movements of the bar 62 and hence rapid return of the potentiometer 42 to its neutral position.

At the same time, the neutral position of the device of the invention for travel under maximum steering conditions is such that the pin 66 is situated in one or the other end portion of the slot 64, so that rotations of the positioning wheel 30 produce minimal angular travel of the bar 62 and hence slow return of the potentiometer 42 to its neutral position.

Consequently during rectilinear travel the sensitivity of the device is higher, allowing vehicle steering to be corrected by minimal movements, whereas on bends the sensitivity of the device is lower and more in line with driver requirements in this situation.

Limit switches are provided at the ends of the angular travel range of the positioning wheel 30 to prevent these values being exceeded.

Although the present invention is primarily intended for use on motor vehicles driven by disabled persons, it is likewise applicable to motor vehicles of other type and to power machines, for example for goods handling, in which the large number of required manoeuvres could result in discomfort and fatigue for the operator.

## Claims

1. A device for operating the steering in motor vehicles in general, **characterised by** comprising:
- a mechanical unit (10, 12) for operating the steering system in the two direction,
- a gear coupling between said mechanical unit (10, 12) and a positioning wheel (30),
- a member (6) by which the driver controls the steering, said control member having a neutral central position and two positions displaced from said central position for steering in one or other direction,
- a position transducer (42) with a first part (48) rotatably associated with the two directions of rotation of said positioning wheel (30) and with a second part (40) movable relative to the first and associated with said control member (6),
- a control unit (8) connected to said position transducer (42) to receive signals controlling steering in one or other direction in accordance with the position of said control member (6) when deviated from said neutral central position, and also connected to said mechanical unit to cause said positioning wheel (30) to rotate in accordance with the signals received from said position transducer.

2. A device as claimed in claim 1, **characterised in that** said mechanical unit comprises an electric motor (10) and a speed reducer (12).

3. A device as claimed in claim 2, **characterised in that** the speed reducer (12) is of reversible type.

4. A device as claimed in claim 3, **characterised in that** the speed reducer is of worm-helical gear type.

5. A device as claimed in claim 1, **characterised in that** the control member (6) operable by the operator is a lever.

6. A device as claimed in claim 1, **characterised in that** the control member (6) operable by the operator is a slider.

7. A device as claimed in claim 1, **characterised in that** the control member (6) operable by the operator is a pedal.

8. A device as claimed in claim 1, **characterised in that** the gear coupling between the exit shaft (14) of the speed reducer (12) and the positioning wheel has a ratio of 1:6, the control lever (32) having a maximum travel of 180°.

9. A device as claimed in claim 2, **characterised in that** the exit shaft (14) of the speed reducer (12) is mechanically connected to the steering column (4).

10. A device as claimed in claim 9, **characterised in that** the exit shaft (14) of the speed reducer (12) is connected via at least one universal joint (16, 16') to a first gearwheel (18) engaging a second gearwheel (20) rotationally rigid with the steering column (4).

11. A device as claimed in claim 1, **characterised in that** the control member (6) comprises a lever (32) rigid with a shaft (34) associated with the second part of said position transducer (42) and able to rotate relative to a structure associated with the first part of said position transducer (42) and mechanically connected in its rotations to said positioning wheel (30).

12. A device as claimed in claim 11, **characterised in that** a pin (50) is applied to the lever (32) and is opposed by elastic means (52) which are secured to the first part (48) of said position transducer (42) and are able to cause said lever (32), in the absence of other stresses, to assume the neutral position between the two end positions.

13. A device as claimed in claim 1, **characterised in that** rigid with the shaft (34) of the lever (32) there is a first gearwheel (36) engaging a second gearwheel (38) of diameter less than the first and mechanically associated with the second part (40) of the position transducer (42), said shaft (34) being able to rotate within a coaxial shaft (44) rigid with the first part of said position transducer (42) and carrying wound about it two members (46) connected to said positioning wheel (30).

14. A device as claimed in claim 1, **characterised in that** the body (32) of the transducer and the positioning wheel (30) are connected together in both directions of rotation by a pair of flexible cables (36) axially slidable within respective sheaths.

15. A device as claimed in claim 14, **characterised in that** the two flexible cables (46) are connected at one end to two diametrically opposite points of the first part of said position transducer (42) and at the other end to two corresponding diametrically opposite points of said positioning wheel (30).

16. A device as claimed in claim 14, **characterised in that** the two flexible cables (46) are connected at one end to two diametrically opposite points of the first part of said position transducer (42) and at the other end to the free end of a bar (662) connected to said positioning wheel (30) by an oscillating link coupling.

17. A device as claimed in claim 15, **characterised in that** the bar (62) is provided with a pin (66) slidably engaged in a slot (64) provided in said positioning wheel (30).

18. A device as claimed in claim 17, **characterised in that** the slot (64) of the positioning wheel is of spiral extension, with a central portion of substantially continuously varying radius and two end portions of radius varying decreasingly between the point of connection to said central portion and the slot ends, at which the radius variations are virtually zero, rectilinear travel of the motor vehicle being achieved when said pin (66) is positioned substantially in the centre of said slot (64).
